# EUROPEAN PATENT SPECIFICATION

(11) **EP 4 264 073 B1**
(45) Date of publication and mention of the grant of the patent: **24.09.2025**
(21) Application number: 21835208.6
(22) Date of filing: 07.12.2021
(51) Int. Cl.: F16C 39/02, F16C 19/52, F16C 27/04, F16C 33/78, F04D 29/042, F04D 29/059, F04D 29/66, F04D 29/049, F04D 19/04

(54) **A BEARING ASSEMBLY FOR A PUMP AND A PUMP COMPRISING THE BEARING ASSEMBLY**
LAGERANORDNUNG FÜR EINE PUMPE UND PUMPE MIT DER LAGERANORDNUNG
ENSEMBLE PALIER POUR UNE POMPE ET POMPE COMPRENANT L'ENSEMBLE PALIER

(30) Priority: 15.12.2020 GB 202019824
(43) Date of publication of application: 25.10.2023
(73) Proprietor: Edwards, S.R.O., 78349 Lutin (CZ)
(72) Inventor: CHROMEK, Lukas, 783 49 Lutin (CZ); LUCCHETTA, Emiliano, Burgess Hill Sussex RH15 9TW (GB)
(74) Representative: Totman, Clare Elizabeth
(86) International application number: PCT/EP2021/084587
(87) International publication number: WO 2022/128624

(56) References cited:
- EP-A1- 0 683 329
- DE-A1- 102010 032 111
- DE-U1- 202014 001 654
- FR-A- 771 765
- FR-A1- 2 281 517
- US-A- 2 716 580

## Description

### FIELD OF THE INVENTION

The field of the invention relates to bearing assemblies for pumps and to pumps comprising such bearing assemblies.

### BACKGROUND

If a mechanical bearing fails, the rotating elements of the bearing are no longer held in their tangential position and may group together, allowing excessive radial excursion to occur. This can lead to contact between the rotor and stator.

Backup bearings may be used to limit radial and/or axial excursion in the event of a bearing failure and to thereby protect the pump from contact between the rotor and stator.

The use of a bearing shield to inhibit lubricant leakage from a bearing is known. One type of shield is the clip-on shield that clips to the outer ring or race and covers the annular gap between the inner and outer ring or race. Such a shield is flexible, may be dislodged in extreme conditions and provides no protection to the bearing or pump if there is a bearing failure.

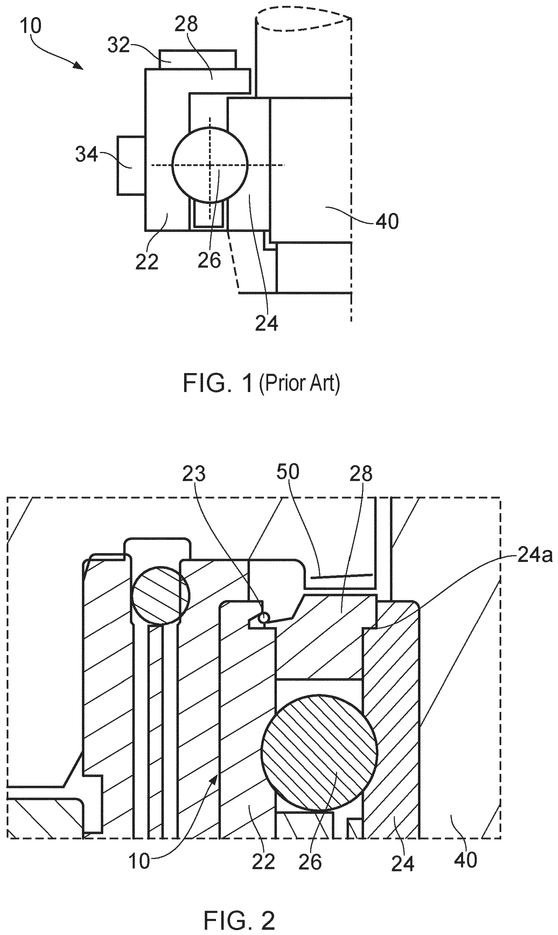

Figure 1 shows a prior art bearing shield that is integral with the outer ring and that in addition to inhibiting lubricant from exiting the bearing provides some radial protection for the pump in case of bearing failure.

Bearing assembly 10 has a shield 28 integral with the outer race 22 that provides support for the axial damping ring 32 which is used to locate the bearing axially and providing the required stiffness and damping. In this example inner ring 24 of the bearing is mounted against shaft 40 and rolling element 26 is housed between inner ring 24 and outer ring 22, outer ring 22 supporting damping ring 34. This bearing assembly is one that is used in some turbomolecular pumps

Such a bearing assembly provides an integral shield that is more robust / stiff than typical 'clip-on' seals. Due to its increased robustness it can act as an end stop in case of bearing failure limiting the axial and radial excursion and thus protecting the pump.

Although a shield that is integral with the outer ring may be more robust, it does require a non standard bearing and additional room and can not be easily fitted to pumps that are conventionally designed for use with clip - on shields. Furthermore, bearings such as a deep groove ball bearing that require tilting of the rings during assembly cannot have a shield that is integral with the outer ring and faces the inner ring and the tight tolerances that are required to allow a small running clearance. To address this problem and provide tight tolerances while allowing bearing assembly the shield is configured to face the shaft and thus, such bearing assemblies require a special seat machined on the shaft.

It would be desirable to provide a bearing assembly with a shield that is robust, simple to assemble and does not take up too much space.

FR2281517 describes a bearing having inner and outer races, a plurality of balls disposed in an annular retainer, and a pair of sealing rings, each ring having a radially outer flange resting against the surface of the outer race and disposed in part between the retainer and the outer race, and a radial flange extending towards the inner race and overlying the retainer.

US2716580 describes a bearing having inner and outer races, a plurality of balls disposed in a retainer, and grease shields located on each side of the bearing. Each grease shield comprises an annular channel base spacing the outer and inner races and integral outer and inner channel sides extending toward the balls. Dust shields extend over the grease shields.

EP0683329 describes a bearing having an inner race, an outer race and rolling members interposed between the races. The bearing comprises a partial sealing member attached to either the inner race or the outer race.

DE202014001654 describes a bearing having an inner race, an outer race and rolling members interposed between the races. Sealing elements extend between the inner and outer races for sealing the space occupied by the rolling members.

### SUMMARY

A first aspect provides a bearing assembly for mounting a rotatable shaft of a pump, said bearing assembly comprising: a bearing comprising an inner ring and an outer ring; a shield extending between said inner and said outer ring and obscuring at least a portion of an annular gap between said inner and outer ring; said shield being configured to extend axially into said annular gap between said inner and said outer ring, an axial length of said shield extending between said inner and outer ring comprising more than 20% of an axial length of at least one of said inner or outer ring, and a shield retainer for retaining said shield and inhibiting axial movement of said shield out of said bearing; wherein said bearing assembly further comprises a bearing support configured to support said outer ring of said bearing, said bearing support surrounding at least a portion of an outer surface of said outer ring and extending across at least a portion of one end surface of said outer ring, said shield retainer being mounted on said bearing support.

Shields for inhibiting oil leakage from bearings are known and may be formed by flexible material that may be clipped or press fitted to the outer ring. Were a bearing to fail such a flexible shield would be dislodged from position. A first aspect provides a shield that is thicker than a conventional shield, that is one with a significant axial length, such that it extends into the annular gap between the inner and outer ring by more than 20% of a length of at least one of these rings. Not only does this provide a more robust shield, but it also means that in the unlikely event of failure of the bearing the shield is likely to be retained within the bearing and provide protection to the pump.

Although, the bearing may comprise lubricant between inner and outer rings, in some embodiments said bearing comprises rolling elements mounted between said inner and outer rings, said axial length of said shield being more than 40% of a diameter of said rolling elements.

Where the bearing is a rolling element bearing then the axial length of the shield may be more than 40% of a diameter of the rolling element such that the shield extends significantly within the annular gap between the inner and outer ring.

One convenient way of mounting a shield onto a bearing that may not require additional components is to use a transition fit.

A transition fit is a compromise between a clearance and interference fit and allows a small amount of clearance allowing the inner ring to rotate while providing effective shielding.

In some embodiments, said material of said shield and said bearing outer ring are formed of a material with a comparable coefficient of thermal expansion

During operation the temperature of a pump will change and thus, it may be advantageous if the coefficient of thermal expansion of the shield and the bearing outer ring where they are made of different materials are comparable. A comparable coefficient of thermal expansion may be one with a difference between the two coefficients of expansion is less than 10%.

In some embodiments, said material of said shield and said bearing outer ring are formed of a same material.

Forming the shield and the bearing outer ring of the same material allows their thermal coefficients of expansion to be the same and avoids the problem of differential expansion. It may be that the properties of the outer ring and the shield are such that different materials are preferred and where this is the case materials of a similar coefficient of thermal expansion should be selected. The bearing assembly comprises a shield retainer for retaining said shield and inhibiting axial movement of said shield out of said bearing.

According to the invention, the bearing assembly further comprises: a bearing support configured to support said outer ring of said bearing, said bearing support surrounding at least a portion of an outer surface of said outer ring and extending across at least a portion of one end surface of said outer ring, said shield retainer being mounted on said bearing support.

This may provide ease of assembly and a robust retention of the shield.

In some embodiments, said bearing assembly further comprises a circlip. Although the shield retainer may have a number of forms, in some embodiments the shield retainer comprises a circlip.

In some embodiments, at least one of said inner and outer ring comprises a recess at one end of said inner surface, said shield comprising a protrusion extending into said recess.

The shield may be configured to be seated in a recess in the outer ring and/or be mounted to extend towards a recess in an inner ring.

In some embodiments, said shield is configured to extend towards an outer surface of said inner ring, an inner surface of said shield and said outer surface forming a clearance gap between them.

The shield may be mounted such that there is a clearance gap between the inner ring of the bearing and the shield, the clearance gap being configured to allow rotation of the inner ring with the shaft while still providing effective sealing. The clearance gap is a radial gap and sets a limit to radial movement of the inner ring and thus, the shaft. Where the clearance gap is smaller than other radial clearances in the pump then in the event of excessive radial excursion of the bearing contact will be between the inner ring and integral shield rather than within the pumping mechanism. The shield is configured to be robust enough to withstand forces generated during such a failure condition and protects the pump.

In some embodiments, said inner ring comprises said recess, said shield and said recess forming an axial and a radial clearance gap between them.

Where the inner ring has a recess into which the shield extends then there are radial and axial clearance gaps between the shield and inner ring and these provide axial and radial limitations to the amount of excursion of the bearing and may act to protect the pump from damage in case of bearing failure.

In some embodiments, said shield is configured to provide at least one of an axial and radial end stop in case of failure of said bearing.

The radial and/or axial clearances between the shield and the inner ring may be set to be low such that were the bearing to fail the inner ring and the shield will contact each other and if the shield is robust enough to withstand forces generated during the failure condition it will maintain the inner ring in position, any radial excursion being limited to that of the clearance gap.

In some embodiments said shield is configured to provide both an axial and radial end stop in case of failure of said bearing.

In some embodiments the shield may provide an axial end stop in both axial directions.

A second aspect provides a pump comprising at least one rotatable shaft supporting a rotor within a stator, at least one of said at least one rotatable shaft being mounted on at least one bearing assembly according to a first aspect.

In some embodiments, said stator comprises a member having a retaining surface configured to extend across and be spaced from said shield, an axial distance between said shield and said retaining member being less than an axial length of said shield, such that if said shield is axially dislodged, said shield is retained within said bearing by said retaining member.

The axial length of the shield means that it can be retained within the annular gap where a retaining surface extends across the shield and there is an axial gap between the shield and the retaining surface that is less than the length of the shield. Retaining the shield within the bearing and within the annular gap between the inner and outer rings, allows the shield to act as a backup bearing.

In some embodiments, a radial clearance gap between said inner ring and said shield is less than any other radial clearance gaps within said pump.

The pump may be configured so that the radial clearance gap between the inner ring and the shield is small enough so that were the bearing to fail, radial excursion would be halted by the impact between the inner ring and the shield before any other components of the pump contacted each other. In the case that there is a recess in the inner ring and there is also an axial clearance gap, the pump may be configured so that the axial clearance gap between the inner ring and the shield is less than any other axial clearance gaps within the pump, such that initial axial impact will also be with the shield and inner ring.

Although the pump of the second aspect may be a compressor, in some embodiments it comprises a vacuum pump. Vacuum pumps rotate at high speed and need effective bearings. Furthermore, they are expensive machines and in the unlikely event of a bearing failure it is important to protect them.

Further particular and preferred aspects are set out in the accompanying independent and dependent claims.

### BRIEF DESCRIPTION OF THE DRAWINGS

Embodiments of the present invention will now be described further, with reference to the accompanying drawings, in which:
Figure 1 shows a bearing according to the prior art;
Figure 2 shows a bearing assembly where the shield retainer is within the outer ring;
Figure 3 shows an embodiment of a bearing assembly where the shield is retainer is within the bearing support; and
Figures 4 and 5 show further bearing assemblies.

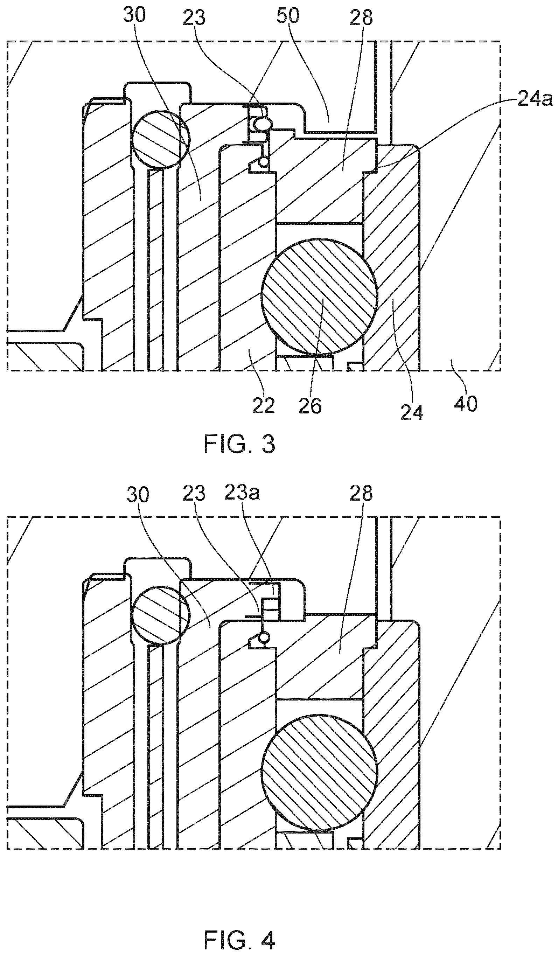

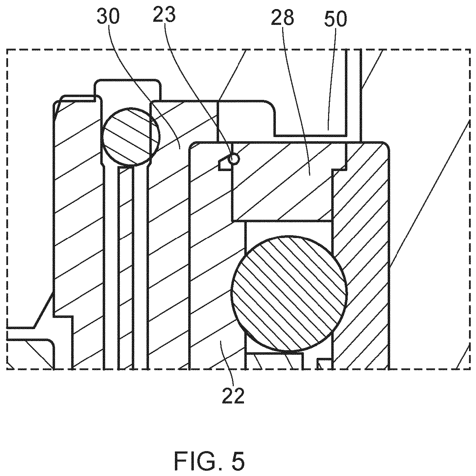

Figures 3 and 4 show bearing assemblies according to the invention while the bearing assemblies shown in Figures 2 and 5 are examples not part of the invention.

### DESCRIPTION OF THE EMBODIMENTS

Figure 2 shows a bearing assembly 10. The bearing assembly 10 comprises an inner ring 24, an outer ring 22 and rolling elements 26 held between the two. The inner ring 24 is mounted on a rotatable shaft 40 of a pump. The bearing assembly has a shield 28 mounted in the annular gap between the inner ring 24 and the outer ring 22. The shield has a substantial axial length such that it extends into the annular gap between the two rings by at least 20%, preferably more than 30% of their axial length. The bearing is a rolling element bearing and the shield has a length of more than 40% preferably more than half the diameter of the rolling elements 26. This substantial axial length provides a robust shield which can act as a backup bearing in case of bearing failure.

Shield 28 is mounted in a recess on an axial end of outer ring 22 and is retained in position by circlip 23. There is also a recess 24a at the same axial end of the inner ring 24. Shield 28 has a protrusion that extends into this recess 24a. The shield 28 is mounted on the outer ring 23 such that there is a clearance gap between the shield 28 and the inner ring 24. As there is a recess and a corresponding protrusion there is both a radial clearance and an axial clearance between the shield and the inner ring and thus, in the event of radial or axial movement the inner ring and shield will contact each other and the length of the clearance gap provides a limit to the movement that the inner ring and thus, the shaft 40 mounting the rotor of the pump can travel.

In this way, the shield acts as both a lubricant shield and a backup bearing for radial and axial movement. In this embodiment, there is a retaining surface 50 that extends above shield 28 and is part of the stator of the pump. This retaining surface 50 is axially distanced from the shield by an amount that is less than the axial length of the shield such that it retains the shield within the annular gap between the inner and outer rings such that in the unlikely event of bearing failure the shield will be retained within the annular gap between the bearing rings.

Figure 3 shows an embodiment that is very similar to the assembly of Figure 2 but where the shield 28 extends above the outer ring 22 and is retained in position by a circlip 23 mounted in bearing support 30 which in this embodiment is a compact spring metal damper CMSD, otherwise known as a resilient support, as described in WO2008035113, which extends around the outer surface of the outer ring and across a portion of the axial end surface of the outer ring. Retaining the shield using a retaining member mounted in the bearing support rather than the outer ring may provide robust support for the retaining member and allows the bearing to be unaffected by the mounting of the shield.

Figure 4 shows a further embodiment where again the shield 28 is retained in position by a fitting mounted on the bearing support 30. In this embodiment there is a bayonet fitting 23a and a circlip 23 both mounted on the compact spring metal damper 30.

Figure 5 shows an alternative assembly with a similar shaped shield 28 that has a recess for receiving a circlip that is mounted in the outer ring 22 of the bearing assembly. Again there is a retaining surface 50 that extends above the one, in this case the upper, axial surface of the shield 28 and acts to retain the shield 28 in its axial position in the case of failure of the bearing where the circlip 23 may become dislodged.

The bearing assemblies shown are a section through one half of the assembly a portion of the shaft 40 and some of the stator. The shaft 40 supports a rotor that is configured to rotate within a stator and thereby pump a fluid. The pump may be a vacuum pump where it is important to protect the vacuum from oil leakage. There may be a single shaft 40 with one bearing assembly or there may be two shafts each supported by a bearing assembly .

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

### REFERENCE SIGNS

- 10: bearing assembly
- 22: outer ring
- 24: inner ring
- 24a: recess
- 23: circlip
- 26: rolling element
- 28: shield
- 30: bearing support
- 32, 34: damping ring
- 40: shaft
- 50: retaining surface

## Claims

1. A bearing assembly (10) for mounting a rotatable shaft (40) of a pump, said bearing assembly comprising:
a bearing comprising an inner ring (24) and an outer ring (22);
a shield (28) extending between said inner and said outer ring and obscuring at least a portion of an annular gap between said inner and outer ring;
said shield (28) being configured to extend axially into said annular gap between said inner and said outer ring, an axial length of said shield extending between said inner and outer ring comprising more than 20% of an axial length of at least one of said inner or outer ring; and
a shield retainer (23) for retaining said shield and inhibiting axial movement of said shield (28) out of said bearing; **characterised in that**
said bearing assembly further comprises a bearing support (30) configured to support said outer ring (22) of said bearing, said bearing support (30) surrounding at least a portion of an outer surface of said outer ring and extending across at least a portion of one end surface of said outer ring, said shield retainer (23) being mounted on said bearing support (30).

2. A bearing assembly according to claim 1, said bearing comprising rolling elements (26) mounted between said inner and outer rings, said axial length of said shield being more than 40% of a diameter of said rolling elements.

3. A bearing assembly according to any preceding claim, wherein said material of said shield (28) and said bearing outer ring (22) are formed of a material with a comparable coefficient of thermal expansion.

4. A bearing assembly according to claim 3, wherein said material of said shield (28) and said bearing outer ring (22) are formed of a same material.

5. A bearing assembly according to any preceding claim, said shield retainer comprising a circlip (23).

6. A bearing assembly according to any preceding claim when said bearing support (30) comprises a compact spring metal damper.

7. A bearing assembly according to any preceding claim, wherein at least one of said inner and outer ring comprises a recess at one end of said inner surface, said shield comprising a protrusion extending into said recess.

8. A bearing assembly according to any preceding claim, wherein said shield is configured to extend towards an outer surface of said inner ring, an inner surface of said shield and said outer surface of said inner ring forming a clearance gap between them.

9. A bearing assembly according to claim 7 and 8, wherein said inner ring (24) comprises said recess (24a), said shield and said recess forming an axial and a radial clearance gap between them.

10. A bearing assembly according to any preceding claim, wherein said shield is configured to provide at least one of an axial and radial end stop in case of failure of said bearing.

11. A pump comprising at least one rotatable shaft supporting a rotor within a stator, at least one of said at least one rotatable shaft being mounted on at least one bearing assembly according to any preceding claim.

12. A pump according to claim 11, said stator comprising a member having a retaining surface (50) configured to extend across and be spaced from said shield, an axial distance between said shield and said retaining surface being less than an axial length of said shield, such that if said shield is axially dislodged, said shield is retained within said bearing by said retaining surface.

## Patentansprüche

1. Lageranordnung (10) zum Montieren einer drehbaren Welle (40) einer Pumpe, wobei die Lageranordnung umfasst:
ein Lager, umfassend einen Innenring (24) und einen Außenring (22);
eine Abschirmung (28), die sich zwischen dem Innen- und dem Außenring erstreckt und mindestens einen Teil eines ringförmigen Spalts zwischen dem Innen- und Außenring verdeckt;
wobei die Abschirmung (28) dazu ausgestaltet ist, sich axial in den ringförmigen Spalt zwischen dem Innen- und dem Außenring zu erstrecken, wobei eine axiale Länge der Abschirmung, die sich zwischen dem Innen- und Außenring erstreckt, mehr als 20 %einer axialen Länge mindestens des Innen- und/oder Außenrings umfasst; und
einen Abschirmungshalter (23) zum Halten der Abschirmung und Blockieren einer axialen Bewegung der Abschirmung (28) aus dem Lager; **dadurch gekennzeichnet, dass**
die Lageranordnung ferner eine Lagerstütze (30), dazu ausgestaltet, den Außenring (22) des Lagers zu stützen, umfasst, wobei die Lagerstütze (30) mindestens einen Teil einer Außenfläche des Außenrings umgibt und sich über mindestens einen Teil einer Abschlussfläche des Außenrings erstreckt, wobei der Abschirmungshalter (23) an der Lagerstütze (30) montiert ist.

2. Lageranordnung nach Anspruch 1, wobei das Lager zwischen dem Innen- und Außenring montierte Rollenelemente (26) umfasst, wobei die axiale Länge der Abschirmung mehr als 40 %eines Durchmessers der Rollenelemente beträgt.

3. Lageranordnung nach einem der vorhergehenden Ansprüche, wobei das Material der Abschirmung (28) und des Lageraußenrings (22) aus einem Material mit einem vergleichbaren Koeffizienten der thermischen Ausdehnung ausgebildet ist.

4. Lageranordnung nach Anspruch 3, wobei das Material der Abschirmung (28) und des Lageraußenrings (22) aus einem gleichen Material ausgebildet sind.

5. Lageranordnung nach einem der vorhergehenden Ansprüche, wobei der Abschirmungshalter einen Sicherungsring (23) umfasst.

6. Lageranordnung nach einem der vorhergehenden Ansprüche, wobei die Lagerstütze (30) einen kompakten Federmetalldämpfer umfasst.

7. Lageranordnung nach einem der vorhergehenden Ansprüche, wobei mindestens einer von dem Innen- und Außenring an einem Ende der Innenfläche eine Ausnehmung umfasst, wobei die Abschirmung einen sich in die Ausnehmung erstreckenden Vorsprung umfasst.

8. Lageranordnung nach einem der vorhergehenden Ansprüche, wobei die Abschirmung dazu ausgestaltet ist, sich in Richtung einer Außenfläche des Innenrings zu erstrecken, wobei eine Innenfläche der Abschirmung und die Außenfläche des Innenrings dazwischen einen Abstandsspalt ausbilden.

9. Lageranordnung nach Anspruch 7 oder 8, wobei der Innenring (24) die Ausnehmung (24a) umfasst, wobei die Abschirmung und die Ausnehmung zwischen sich einen axialen und einen radialen Abstandsspalt ausbilden.

10. Lageranordnung nach einem der vorhergehenden Ansprüche, wobei die Abschirmung dazu ausgestaltet ist, im Fall eines Defekts des Lagers mindestens einen axialen und/oder radialen Endanschlag bereitzustellen.

11. Pumpe, umfassend mindestens eine drehbare Welle, die einen Rotor innerhalb eines Stators stützt, wobei mindestens eine von der mindestens einen drehbaren Welle an mindestens einer Lageranordnung nach einem der vorhergehenden Ansprüche montiert ist.

12. Pumpe nach Anspruch 11, wobei der Stator ein Element mit einer Haltefläche (50) umfasst, dazu ausgestaltet, sich über die Abschirmung und von ihr beabstandet zu erstrecken, wobei ein axialer Abstand zwischen der Abschirmung und der Haltefläche kleiner als eine axiale Länge der Abschirmung ist, sodass dann, wenn die Abschirmung axial verdrängt wird, die Abschirmung von der Haltefläche in dem Lager gehalten wird.

## Revendications

1. Ensemble palier (10) destiné à monter un arbre rotatif (40) d'une pompe, ledit ensemble palier comprenant :
un palier comprenant une bague interne (24) et une bague externe (22) ;
un cache de protection (28) s'étendant entre ladite bague interne et ladite bague externe et dissimulant au moins une partie d'un espace annulaire entre ladite bague interne et ladite bague externe ;
ledit cache de protection (28) étant configuré pour s'étendre axialement dans ledit espace annulaire entre ladite bague interne et ladite bague externe, une longueur axiale dudit cache de protection s'étendant entre ladite bague interne et ladite bague externe comprenant plus de 20 % d'une longueur axiale d'au moins l'une de ladite bague interne ou de ladite bague externe ; et
un dispositif de retenue de cache de protection (23) destiné à retenir ledit cache de protection et empêchant le mouvement axial dudit cache de protection (28) hors dudit palier ; **caractérisé en ce que**
ledit ensemble palier comprend en outre un support de palier (30) configuré pour supporter ladite bague externe (22) dudit palier, ledit support de palier (30) entourant au moins une partie d'une surface externe de ladite bague externe et s'étendant à travers au moins une partie d'une surface d'extrémité de ladite bague externe, ledit dispositif de retenue de cache de protection (23) étant monté sur ledit support de palier (30).

2. Ensemble palier selon la revendication 1, ledit palier comprenant des éléments roulants (26) montés entre lesdites bagues interne et externe, ladite longueur axiale dudit cache de protection étant supérieure à 40 % d'un diamètre desdits éléments roulants.

3. Ensemble palier selon l'une quelconque des revendications précédentes, dans lequel lesdits matériaux dudit cache de protection (28) et de ladite bague externe de palier (22) sont formés d'un matériau avec un coefficient de dilatation thermique comparable.

4. Ensemble palier selon la revendication 3, dans lequel lesdits matériaux dudit cache de protection (28) et de ladite bague externe de palier (22) sont formés d'un même matériau.

5. Ensemble palier selon l'une quelconque des revendications précédentes, ledit dispositif de retenue de cache de protection comprenant un anneau de retenue (23).

6. Ensemble palier selon l'une quelconque des revendications précédentes, dans lequel ledit support de palier (30) comprend un amortisseur métallique à ressort compact.

7. Ensemble palier selon l'une quelconque des revendications précédentes, dans lequel au moins l'une de ladite bague interne et de ladite bague externe comprend un renfoncement à une extrémité de ladite surface interne, ledit cache de protection comprenant une saillie qui s'étend dans ledit renfoncement.

8. Ensemble palier selon l'une quelconque des revendications précédentes, dans lequel ledit cache de protection est configuré pour s'étendre vers une surface externe de ladite bague interne, une surface interne dudit cache de protection et ladite surface externe de ladite bague interne formant un espace de dégagement.

9. Ensemble palier selon les revendications 7 et 8, dans lequel ladite bague interne (24) comprend ledit renfoncement (24a), ledit cache de protection et ledit renfoncement formant un espace de dégagement axial et un espace de dégagement radial entre eux.

10. Ensemble palier selon l'une quelconque des revendications précédentes, dans lequel ledit cache de protection est configuré pour offrir au moins l'une d'une butée axiale et d'une butée radiale en cas de défaillance dudit palier.

11. Pompe comprenant au moins un arbre rotatif qui supporte un rotor dans un stator, au moins l'un dudit au moins un arbre rotatif étant monté sur au moins un ensemble palier selon l'une quelconque des revendications précédentes.

12. Pompe selon la revendication 11, ledit stator comprenant un élément ayant une surface de retenue (50) configurée pour s'étendre en travers et être espacée dudit cache de protection, une distance axiale entre ledit cache de protection et ladite surface de retenue étant inférieure à une longueur axiale dudit cache de protection, de sorte que, si ledit cache de protection est délogé axialement, ledit cache de protection soit retenu dans ledit palier par ladite surface de retenue.
